# EUROPEAN PATENT APPLICATION

(11) **EP 4 517 453 A1**
(43) Date of publication of application: **05.03.2025**
(21) Application number: 24173187.6
(22) Date of filing: 29.04.2024
(51) Int. Cl.: G05B 15/02, G05B 21/02, H04L 12/28, G08C 17/02

(54) **COORDINATED CONTROL METHOD AND APPARATUS FOR DEVICE, ELECTRONIC DEVICE, AND MEDIUM**

(30) Priority: 30.08.2023 CN 202311110596
(71) Applicant: Xiaomi EV Technology Co., Ltd., 100176 Beijing (CN)
(72) Inventor: XIA, Xueyan, Beijing, 100176 (CN); ZHAI, Wenzhe, Beijing, 100176 (CN); ZHANG, Hui, Beijing, 100176 (CN); JIANG, Jingzhe, Beijing, 100176 (CN); LI, Zehui, Beijing, 100176 (CN); JIN, Kangkang, Beijing, 100176 (CN)
(74) Representative: Dehns Germany Partnerschaft mbB

(57) **Abstract**

Provided are a coordinated control method and apparatus for a device, an electronic device, and a medium, which relate to the technical field of the Internet. The method includes: acquiring (5110) an operation signal generated for a control operation on an operation object; determining (S120) a first control event associated with the operation signal; performing smart association on the basis of the first control event corresponding to the operation object; determining (S130) a second control event associated with the first control event; and generating (5140) a control signal for controlling a target device according to the second control event.

## Description

### TECHNICAL FIELD

The invention relates to the technical field of the Internet, and in particular to a coordinated control method and apparatus for a device, an electronic device, and a medium.

### BACKGROUND OF THE INVENTION

With an increasing number of devices available, great convenience is brought to people's work and lives.

### SUMMARY OF THE INVENTION

For solving the problems in the related art, the invention provides a coordinated control method and apparatus for a device, an electronic device, and a medium having the features of the independent claims.

In a first aspect, a coordinated control method for a device is provided in an example of the invention. The method includes: acquiring an operation signal generated for a control operation on an operation object; determining a first control event associated with the operation signal; determining a second control event associated with the first control event; and generating a control signal for a target device according to the second control event, where the control signal is configured to control the target device.

Optionally, the target device is a smart household device in case determining that the operation object is a vehicle-mounted device; or the target device is a vehicle-mounted device in case that the operation object is a smart household device.

Optionally, the control signal is configured to control at least one parameter of the target device.

Optionally, the determining a first control event associated with the operation signal includes: categorizing the operation signal, and confirming a category to which the operation signal belongs; converting the operation signal from a format corresponding to the operation object to a format corresponding to the category; and acquiring the first control event according to an operation signal in the format corresponding to the category.

Optionally, the determining a second control event associated with the first control event includes: acquiring first environment information corresponding to the operation object, and acquiring second environment information corresponding to the target device; and determining the second control event for the target device according to the first control event on a condition that the first environment information is consistent with the second environment information.

Optionally, the method further includes: receiving a subscription request from a user terminal for the operation object; and sending the operation signal to the user terminal in response to the subscription request.

Optionally, an operation result of the operation object is carried in the operation signal; and the sending the operation signal to the user terminal includes: taking, on a condition that the operation result is out of a preset range, a boundary value of the preset range as a new operation result; and sending the new operation result to the user terminal.

In a second aspect, a coordinated control apparatus for a device is provided in the example of the invention. The apparatus includes: a first generation module configured to acquire an operation signal generated for a control operation on an operation object; a first association module configured to determine a first control event associated with the operation signal; a second association module configured to determine a second control event associated with the first control event; and a second generation module configured to generate a control signal for a target device according to the second control event, where the control signal is configured to control the target device.

In a third aspect, an electronic device is provided in the example of the invention. The electronic device includes: a processor; and a memory configured to store an instruction executable by the processor; where the processor is configured to implement steps of the coordinated control method for a device in the first aspect of the invention when executing the instruction.

In a fourth aspect, a non-transitory computer-readable storage medium is provided in the example of the invention. The non-transitory computer-readable storage medium stores a computer program instruction, where the computer program instruction implements steps of the coordinated control method for a device in the first aspect of the invention when executed by a processor.

According to the coordinated control method and apparatus for a device, the electronic device, and the medium provided by the invention, the operation signal generated for the control operation on the operation object is acquired; the first control event associated with the operation signal is determined; smart association is performed on the basis of the first control event corresponding to the operation object; the second control event associated with the first control event is determined; and the control signal configured to control the target device is generated according to the second control event. Through the above method, the target device is controlled in a coordinated manner while the operation object is controlled. Accordingly, a user is not required to control a plurality of devices individually, so that an operation process is simplified.

It should be understood that the above general description and the following detailed description are merely illustrative and explanatory, and cannot limit the invention.

### BRIEF DESCRIPTION OF DRAWINGS

The accompanying drawings here are incorporated in the description as a constituent part of the description, illustrate examples conforming to the invention, and serve to explain the principles of the invention along with the description.
Fig. 1 is a flowchart of a coordinated control method for a device shown according to an example;
Fig. 2 is a schematic diagram of an application scenario of a coordinated control method for a device shown according to an example;
Fig. 3 is a flowchart of a coordinated control method for a device shown according to another example;
Fig. 4 is a flowchart of a coordinated control method for a device shown according to yet another example;
Fig. 5 is a schematic diagram of an application scenario of a coordinated control method for a device shown according to yet another example;
Fig. 6 is a schematic diagram of an application scenario of a coordinated control method for a device shown according to yet another example;
Fig. 7 is a flowchart of a coordinated control method for a device shown according to yet another example;
Fig. 8 is a flowchart of a coordinated control method for a device shown according to yet another example;
Fig. 9 is a flowchart of a coordinated control method for a device shown according to still another example;
Fig. 10 is a block diagram of a coordinated control apparatus for a device shown according to an example;
Fig. 11 is a block diagram of a vehicle applying a coordinated control method for a device shown according to an example; and
Fig. 12 is a block diagram of a server configured for a coordinated control method for a device shown according to an example.

### DETAILED DESCRIPTION OF THE INVENTION

Examples will be described in detail here and are illustratively shown in the accompanying drawings. When the following description relates to the accompanying drawings, the same numbers in different accompanying drawings denote the same or similar elements unless indicated otherwise. The embodiments described in the following examples do not denote all embodiments consistent with the invention. On the contrary, the embodiments are merely instances of apparatuses and methods consistent with some aspects of the invention as recited in the appended claims.

With an increasing number of devices available, great convenience is brought to people's work and lives. Currently, the majority of devices are independent of one another and can be controlled through fixed mobile terminal applications (for example, smart phones) only, but do not support the automatic coordination function. Thus, a plurality of devices to be used have to be operated by a user individually, and thus are inconvenient to use. Moreover, without a unified device function description standard, it is difficult for different Internet of Things devices to cooperate with one another, leading to an undesirable industrial chain cooperative capability.

To solve the above problems, the invention provides a coordinated control method and apparatus for a device, an electronic device, and a medium. Another device is controlled in a coordinated manner while one device is controlled. Thus, a user is not required to control a plurality of devices individually, so that an operation process is simplified.

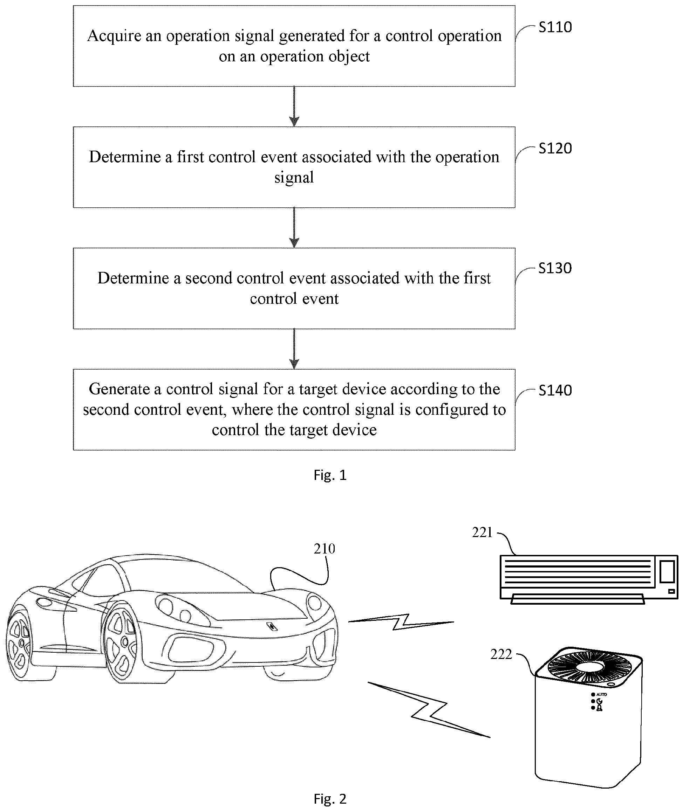

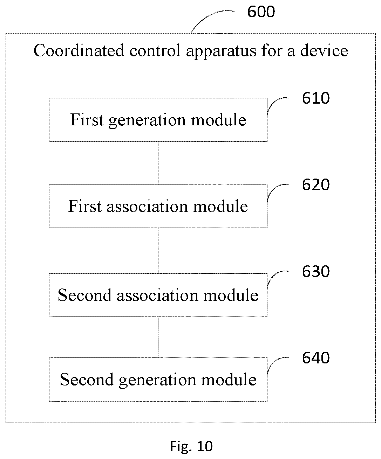

In view of the above, with reference to Fig. 1, a flowchart of a coordinated control method for a device according to an example is shown. The coordinated control method for a device may be applied to the coordinated control apparatus 600 for a device shown in Fig. 10, the electronic device, and the computer-readable storage medium. In the example, the method is applied to the electronic device, for instance. The flow shown in Fig. 1 will be described in detail below. The coordinated control method for a device may specifically include steps S110-S140.

S110, an operation signal generated for a control operation on an operation object is acquired.

The user performs the control operation on the operation object to control the operation object. Moreover, the operation signal is generated for the control operation, and the electronic device acquires the operation signal.

Optionally, the control operation may be an operation of clicking on or dragging the operation object or a button on the operation object. The operation may also be an operation of clicking on, dragging, or swiping a user terminal connected to the operation object. The user terminal may be a smart phone, a tablet computer, a smart wearable device, etc.

The operation signal may be in a form of a controller area network (CAN) signal.

S120, a first control event associated with the operation signal is determined.

A correspondence relation between the operation signal and the first control event is pre-constructed. The first control event associated with the operation signal is determined on the basis of the correspondence relation.

S130, a second control event associated with the first control event is determined.

The second control event corresponding to the target device is determined by performing smart association on the basis of the first control event corresponding to the operation object.

In an embodiment, a correspondence relation between the first control event and the second control event is pre-constructed. The second control event associated with the first control event is determined on the basis of the correspondence relation.

Optionally, the smart association may also be performed in combination with weather, user habits, etc., so as to associate the second control event according to the first control event.

S140, a control signal for a target device is generated according to the second control event, where the control signal is configured to control the target device.

The control signal is sent to the target device. The target device is controlled in a coordinated manner according to the control signal, so that the user may control the plurality of devices by operating one device.

One or more target devices are provided.

In the coordinated control method for a device according to the example, the operation signal generated for the control operation on the operation object is acquired; the first control event associated with the operation signal is determined; smart association is performed on the basis of the first control event corresponding to the operation object; the second control event associated with the first control event is determined; and the control signal configured to control the target device is generated according to the second control event. The target device is controlled in a coordinated manner while the operation object is controlled. Accordingly, the user is not required to control the plurality of devices individually, so that an operation process is simplified.

Optionally, the control signal is configured to control at least one parameter of the target device. The target device is a smart household device in response to determining that the operation object is a vehicle-mounted device; and optionally, the target device is a vehicle-mounted device in response to determining that the operation object is a smart household device. Atomic functions are categorized into attributes, methods, and events. The attributes control parameters of one vehicle-mounted device or household device. A plurality of attributes are encapsulated in the methods and events. The smart household device controls the vehicle-mounted device through the methods. The vehicle-mounted device controls the smart household device through the events. The attributes, methods, and events correspond to different formats individually and are managed in a centralized manner through the atomic functions. Accordingly, function access costs of hardware and the user terminal are reduced. For example, research and development efficiency and communication efficiency are improved. For an Internet of Things protocol, atomic capacities are abstracted in terms of attributes, methods, and events to facilitate communication between devices, reduce the difficulty in communication between devices, and enhance cooperative capacity between devices.

Optionally, a coordinated control function for the operation object and the target device in the foregoing method may be automatically turned on or off. Illustratively, if a number of times of using the target device by the user exceeds a first preset number within a preset time period, coordinated control between the operation object and the target device is automatically turned on, so that the user can use the target device conveniently. The preset time period may be one week, and the first preset number may be four, five, etc. Optionally, if a number of times of using the target device by the user is lower than a second preset number within a preset time period, in order to save on energy consumption, coordinated control between the operation object and the target device is automatically turned off. The second preset number may be zero.

Optionally, the foregoing coordinated control function may also be manually turned on or off as demanded by the user.

In an application scenario, the method is applied to coordinated control between a vehicle and smart household devices at home. With reference to Fig. 2, the scenario involves the vehicle 210 and the smart household devices. The smart household devices may be a smart air conditioning device 221 and a smart air purifier 222 shown in Fig. 2. The vehicle 210 is connected to the smart air conditioning device 221 and the smart air purifier 222 individually.

It should be noted that the smart household devices at home are not limited to the smart air conditioning device 221 and the smart air purifier 222 in Fig. 2, but may be different devices, for example, smart refrigerators, smart rice cookers, and smart doors and windows.

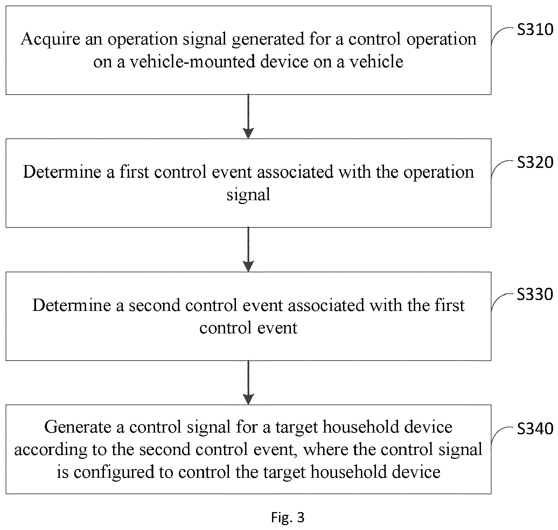

On the basis of the application scenario in Fig. 2, in an embodiment, the electronic device may be a control device on the vehicle 210. For example, the electronic device is a controller on the vehicle 210. In the embodiment, the operation object is the vehicle-mounted device on the vehicle, and the target device is the smart household device. With reference to Fig. 3, the coordinated control method for a device includes steps S310-S340.

S310, an operation signal generated for a control operation on the vehicle-mounted device on the vehicle is acquired.

The user performs the control operation on the vehicle-mounted device on the vehicle to control the vehicle-mounted device. Moreover, the operation signal is generated for the control operation. The operation signal may be a CAN signal. The user here means a driver or a passenger on the vehicle.

The vehicle-mounted device may be an air conditioning device, a vehicle-mounted fragrance device, a vehicle-mounted lighting device, a steering wheel, a sound control lamp, etc. on the vehicle. As an embodiment, the vehicle-mounted device is controlled directly. For example, when the vehicle-mounted device is the steering wheel, the steering wheel is rotated. Optionally, the vehicle-mounted device is configured with a button. The user controls the button on the vehicle-mounted device by clicking on, pressing, or rotating the button. For example, the vehicle-mounted device is a wiper, and a knob configured for the wiper is controlled by rotating the knob of the wiper. Optionally, the user controls the vehicle-mounted device by voice. For example, the user controls the sound control lamp to be turned on by voice.

As another embodiment, application software configured to control the vehicle is mounted on the user terminal. The user realizes remote control by controlling the vehicle by clicking on, dragging, or swiping the application software on the user terminal. For example, the user controls windows of the vehicle to be closed through the application software. The user terminal may be a smart phone, a tablet computer, a smart wearable device, etc.

Optionally, the operation signal generated on the basis of the foregoing control operation is at a high level or a low level. For example, if the operation object is turned on after the control operation, the operation signal is at the high level. If the operation object is turned off after the control operation, the operation signal is at the low level.

S320, a first control event associated with the operation signal is determined.

As an embodiment, a correspondence relation between the operation signal and the first control event is pre-constructed. The first control event associated with the operation signal is determined on the basis of the correspondence relation. For example, the operation signal indicates a signal of turning on the wiper, and the first control event indicates that it is raining in a scenario where the vehicle is positioned. For another example, the operation signal indicates that a temperature of a vehicle-mounted air conditioning device is reduced to 21°C, and the first control event indicates that a temperature of a vehicle-mounted air conditioner is reduced.

S330, a second control event associated with the first control event is determined.

The second control event corresponding to a target household device is determined by performing smart association on the basis of the first control event corresponding to the vehicle-mounted device. For example, the first control event indicates that it is raining in the scenario where the vehicle is positioned, and the second control event may be an event of controlling smart windows at home to be closed. For another example, the first control event indicates that the temperature of the vehicle-mounted air conditioner is reduced, and the second control event may be to control a temperature of the smart air conditioning device at home to be reduced.

S340, a control signal for the target household device is generated according to the second control event, where the control signal is configured to control the target household device.

The control signal for the smart target household device is generated according to the second control event and is sent to the smart target household device. For example, the second control event may be an event of controlling the smart window at home to be closed, the target household device is the smart window, and the control signal is configured to control the smart window to be closed. In the coordinated control method for a device according to the embodiment, the household device at home is coordinated by controlling the vehicle-mounted device on the vehicle. Accordingly, the household device is not required to be manually controlled, so an operation process of controlling the device is simplified. Moreover, before arriving home, the user may control the household device at home, so that the user experience at home is improved.

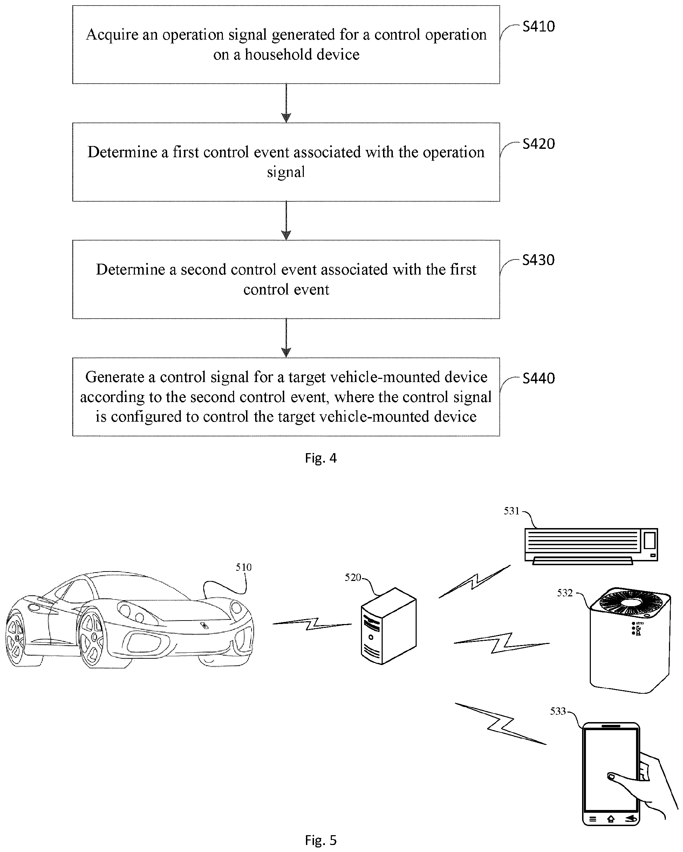

On the basis of the application scenario in Fig. 2, in an embodiment, the electronic device may be the smart household device, such as a controller corresponding to a smart door (not shown in Fig. 2). In the embodiment, the operation object is the smart household device, and the target device is a target vehicle-mounted device. With reference to Fig. 4, the coordinated control method for a device includes:

S410, an operation signal generated for a control operation on a household device is acquired.

The user controls the household device by performing the control operation on household device. In a case that the household device is the smart door, the control operation may be a door closing operation. Moreover, the operation signal is generated for the control operation and is acquired. In combination with the smart door as an example continuously, the operation signal may be at a low level.

S420, a first control event associated with the operation signal is determined.

A correspondence relation between the operation signal and the first control event is pre-constructed. The first control event associated with the operation signal is determined on the basis of the correspondence relation. For example, when the operation signal corresponding to the smart door is at the low level, the first control event determined on the basis of the correspondence relation indicates that the smart door is closed.

S430, a second control event associated with the first control event is determined.

The second control event corresponding to the target vehicle-mounted device is determined by performing smart association on the basis of the first control event corresponding to the household device. Continuously, for example, if the household device is the smart door, the target vehicle-mounted device is the vehicle-mounted air conditioning device, and if the first control event is an event of closing the smart door, the second control event may be an event of controlling the vehicle-mounted air conditioning device to be turned on.

S440, a control signal for the target vehicle-mounted device is generated according to the second control event, where the control signal is configured to control the target vehicle-mounted device.

The target vehicle-mounted device operates according to the control signal. In combination with the above example continuously, the control signal is configured to control the vehicle-mounted air conditioning device to be turned on.

In combination with the foregoing smart door and vehicle-mounted air conditioning device as an example continuously, especially in hot weather, the user experience of using the vehicle can be improved by pre-turning on the vehicle-mounted air conditioning device.

In the coordinated control method for a device according to the embodiment, the vehicle-mounted device on the vehicle is controlled in a coordinated manner by controlling the household device at home. Thus, relevant functions are pre-turned on before the user arrives at a position where the vehicle is positioned, the user's operation on the vehicle-mounted device is simplified, and the experience of using the vehicle is improved.

In another application scenario, the method is applied to coordinated control between the vehicle and smart household devices at home. With reference to Fig. 5, the scenario involves the vehicle 510, a server 520, the smart household devices, and a user terminal 533. The vehicle 510, the smart household devices, and the user terminal 533 are connected to the server 520 individually. For example, the smart household devices may be a smart air conditioning device 531 and a smart air purifier 532 shown in Fig. 5.

On the basis of the application scenario in Fig. 5, the coordinated control method for a device shown in Fig. 1 may also be applied to the server 520 shown in Fig. 5. The target device is the smart household device in response to determining that the operation object is the vehicle-mounted device, so that the vehicle-mounted device controls the smart household device in a coordinated manner. The target device is the vehicle-mounted device in response to determining that the operation object is the smart household device, so that the smart household device controls the vehicle-mounted device in a coordinated manner.

In an embodiment, S120 includes: the operation signal is categorized, and a category to which the operation signal belongs is confirmed; the operation signal is converted from a format corresponding to the operation object to a format corresponding to the category; and the first control event is acquired according to an operation signal in the format corresponding to the category.

Illustratively, the operation object is the vehicle-mounted device. A vehicle-mounted system of the vehicle has a plurality of vehicle-mounted sub-systems and includes an entertainment sub-system, a navigation sub-system, a communication sub-system, etc. The operation signal is categorized according to the vehicle-mounted sub-system corresponding to the operation signal, and a subordinate category of the operation signal is determined. Each category corresponds to one vehicle-mounted sub-system. It can be understood that the operation signals originating from the same vehicle-mounted sub-system belong to the same category. The operation signal is converted from a format corresponding to the vehicle-mounted device to the format corresponding to the category. It can be understood that the format corresponding to the category is a format corresponding to the server, so that the server may correctly read, understand, and process the operation signal. For example, the format corresponding to the vehicle-mounted device is a protobuf format, and the format corresponding to the category is a hyper text transfer protocol (http) format. The server obtains the first control event by processing the operation signal in the format corresponding to the category.

In an embodiment, S130 includes: first environment information corresponding to the operation object is acquired, where for example, the first environment information and second environment information may indicate a rainy day, a sunny day, haze, etc.; and the server acquires locating information of the vehicle and acquires first weather information according to the locating information; and then second weather information corresponding to the target device is acquired. Illustratively, the server acquires the locating information of the vehicle, acquires the first weather information according to the locating information, acquires a home address, and acquires the second weather information according to the home address. For another example, the first environment information and the second environment information may also be locating information. When the coincidence between the first environment information and the second environment information is determined, for example, under the condition that the first environment information and the second environment information are weather information, the first environment information is determined to be consistent with the second environment information in response to determining that the first environment information and the second environment information indicate a rainy day. For another example, under the condition that the first environment information and the second environment information are locating information, the first environment information is determined to be consistent with the second environment information in response to determining that a distance between the first environment information and the second environment information is within a preset distance range. The second control event for the target device is determined according to the first control event after the first environment information is determined to be consistent with the second environment information. For example, the first control event indicates that the wiper wipes off rainwater, and the second control event indicates that the smart window is controlled to be closed in response to determining that the first environment information and the second environment information indicate a rainy day.

In the embodiment, under the condition that the first environment information where the vehicle is positioned is consistent with the second environment information where the home is positioned, the target device is controlled in the coordinated manner when the operation object is controlled. Thus, the accuracy of coordinating the target device can be improved. When the first environment information indicates a sunny day, and the second environment information indicates a rainy day, the first environment information is inconsistent with the second environment information. Rainwater may enter a room in a case that the smart window in a rainy environment is controlled to be opened according to a sunny environment where the vehicle is positioned. In consequence, the coordinated control over the smart window may not satisfy the user demand.

Optionally, as shown in Fig. 5, the coordinated control method for a device further includes: a subscription request from the user terminal 533 for the operation object is received; and the operation signal is sent to the user terminal in response to the subscription request. Illustratively, in response to determining that an operation result is out of a preset range, a boundary value of the preset range is taken as a new operation result; and the new operation result is sent to the user terminal. For example, an angle range by which a vehicle door is openable is between 0° and 180°. An upper limit value 180° of the angle range is taken as the new operation result in response to determining that the operation result indicates that the vehicle door is opened by 190°, and the new operation result indicates that the vehicle door is opened by 180°. Optionally, the new operation result is displayed on the user terminal 533 in a form of text.

Optionally, the user terminal 533 may also subscribe to a state of the target device and display the state of the target device on the user terminal 533 in the form of text to inform the user.

Optionally, the user terminal may also construct a communication connection relation with the vehicle through near-field transmission protocols such as Bluetooth and wireless fidelity (Wi-Fi), and control various vehicle-mounted devices on the vehicle through the communication connection relation. For example, a seat heating function, a horizontal movement position, and a seat back position are controlled through one key on the user terminal on the basis of the terminal interconnected. Thus, the physical strength and time cost of manual operations are reduced.

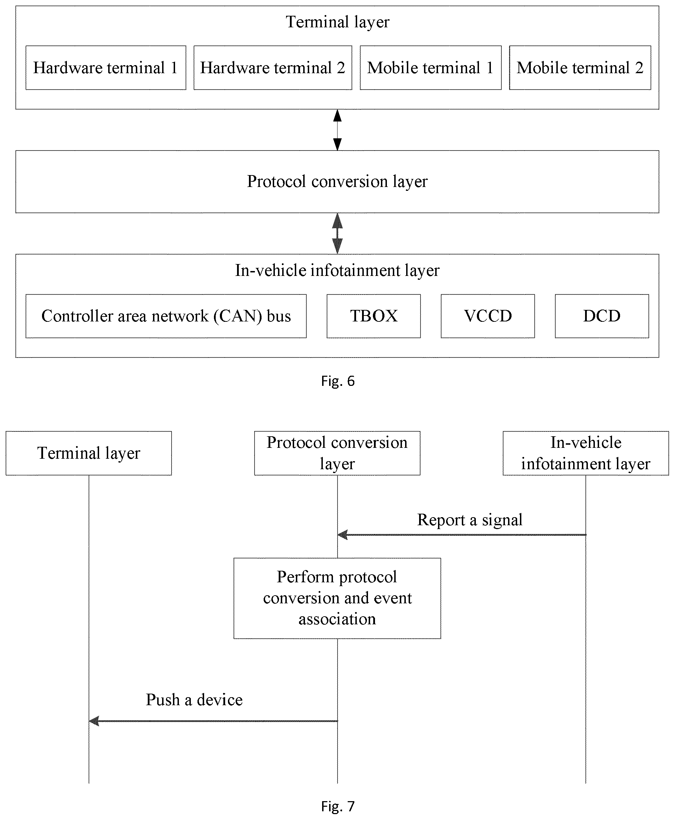

In yet another application scenario, with reference to Fig. 6, the scenario involves a terminal layer, a protocol conversion layer, and an in-vehicle infotainment layer. The terminal layer includes a hardware terminal 1, a hardware terminal 2, a mobile terminal 1, and a mobile terminal 2. In a scenario at home, the hardware terminal 1 and the hardware terminal 2 may be smart household devices, and the mobile terminal 1 and the mobile terminal 2 may be smart phones, tablet computers, smart wearable devices, etc. The protocol conversion layer includes a server. The in-vehicle infotainment layer includes the vehicle. The vehicle includes a CAN bus, a telematics box (TBOX), a vehicle communication and control device (VCCD), and a data communication device (DCD) shown in Fig. 6.

On the basis of the application scenario in Fig. 6, a coordinated control method for a device is provided in the example. With reference to Fig. 7, the coordinated control method for a device includes: the in-vehicle infotainment layer reports a signal to the protocol conversion layer. The signal may be the foregoing operation signal. A CAN signal varies with an operation based on a driving behavior of the user. The protocol conversion layer performs protocol conversion and event association. The protocol conversion is performed as follows: the operation signal is categorized, and a category to which the operation signal belongs is confirmed; the operation signal is converted from a format corresponding to an operation object to a format corresponding to the category; and a first control event is acquired according to an operation signal in the format corresponding to the category. The event association is performed as follows: a second control event associated with the first control event is determined, and a control signal for the target device is generated according to the second control event. The protocol conversion layer pushes the control signal to the terminal layer, and for example, sends the control signal to the target device.

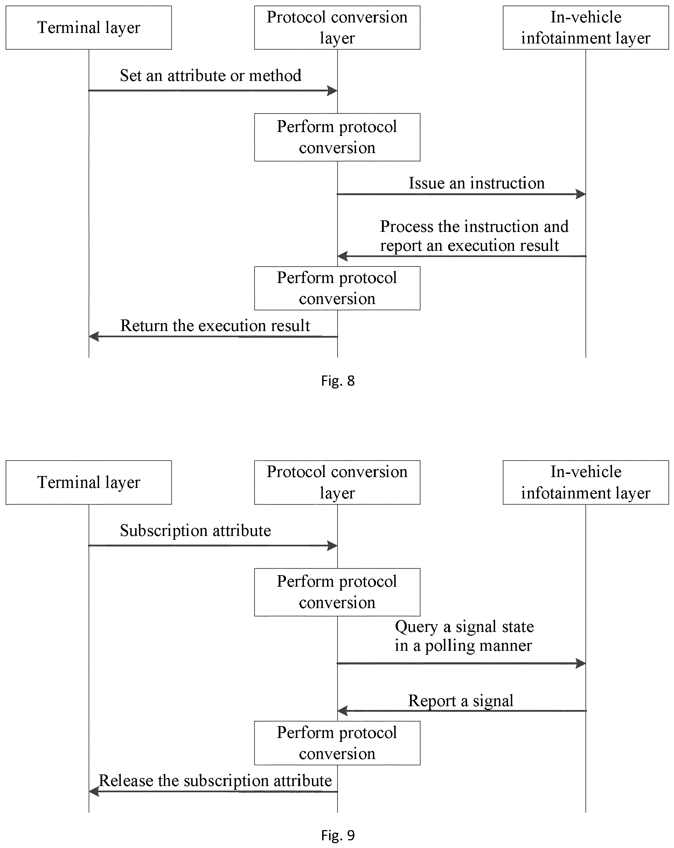

On the basis of the application scenario in Fig. 6, a coordinated control method for a device is provided in the example. With reference to Fig. 8, the coordinated control method for a device includes: the terminal layer sets an attribute or method and sends the attribute or method to the protocol conversion layer. A parameter of the in-vehicle infotainment layer may be controlled through the attribute. A plurality of attributes are encapsulated in the method. It can be understood that the method may control a plurality of parameters of the in-vehicle infotainment layer. The protocol conversion layer performs protocol conversion. It can be understood that the attribute or method of a protocol for the terminal layer is converted into an attribute or method of a protocol for a server layer. The protocol conversion layer issues an instruction to the in-vehicle infotainment layer. The instruction means a control instruction for the in-vehicle infotainment layer generated according to the attribute or method. The in-vehicle infotainment layer obtains an execution result by processing the instruction, and reports the execution result to the protocol conversion layer. The protocol conversion layer converts an execution result of a protocol corresponding to the in-vehicle infotainment layer into an execution result of the protocol corresponding to the terminal layer, and returns the execution result after conversion to the terminal layer.

On the basis of the application scenario in Fig. 6, a coordinated control method for a device is provided in the example. With reference to Fig. 9, the coordinated control method for a device includes: the terminal layer sends a subscription attribute to the protocol conversion layer; and the protocol conversion layer converts an attribute of the protocol corresponding to the terminal layer into an attribute of the protocol corresponding to the in-vehicle infotainment layer through protocol conversion, and sends the attribute after conversion to the in-vehicle infotainment layer. The protocol conversion layer queries a signal state of the in-vehicle infotainment layer through polling. The signal state queried is a signal state corresponding to the subscription attribute of the terminal layer. The in-vehicle infotainment layer reports the signal state to the protocol conversion layer and releases the subscription attribute to the terminal layer after the protocol conversion layer performs protocol conversion.

Optionally, the hardware terminal 1 may replace a conventional vehicle key to control a temperature, a wind direction, a defrosting mode, a cooling mode, a heating mode, and an automatic mode of an air conditioner, and adjust backlight intensity and a media volume of an in-vehicle infotainment screen. Thus, the personalized operation experience is brought to the user.

Internet of Things devices 1 and 2 that belong to general household scenarios may be placed in the vehicle as the vehicle-mounted devices and controlled by perceiving an electrification state, a speed, a gear, and a seat occupancy state of the vehicle. For example, the Internet of Things device 1 is an atmosphere lamp. Brightness and colors of the atmosphere lamp may be adjusted. For example, the Internet of Things device 2 is a fragrance device. A proportion of each fragrance of the fragrance device is adjusted, so that the personalized scenario experience is brought to the user.

Through a message queuing telemetry transport (MQTT) protocol and a HTTP, far-field control over the vehicle may be realized through a variety of user terminals, The state of the vehicle is perceived in real time through a subscription and message pushing system in a cloud, coordinated in a scenario formed by the smart household device and the vehicle, and shared to family-based members of an owner of the vehicle. For example, the user may control the vehicle's locks, windows, ventilation members, front trunk, air conditioner, etc., by voice or through a user interface (UI) on the user terminal. Accordingly, the physical strength and time cost of the manual operation are reduced.

For another example, a charging behavior of the vehicle is controlled on a mobile terminal device, so that the user may control the charging behavior autonomously. Moreover, the user may psychologically estimate a charging time, energy consumption, and cost by updating the vehicle's charging voltage, current, and power state in time at the user terminal. Accordingly, vehicle maintenance and daily travel planning can be performed more conveniently.

For another example, various vehicle risk alarms, such as an abnormal tire pressure, illegal entry, an abnormal cell temperature (being too high or too low), and overheating protection of a thermal system of the air conditioner are prompted to the user terminal according to the state of the vehicle.

For another example, a series of preset operations before travel by vehicle, such as a charging reservation, a cell heating reservation, an air conditioning temperature reservation, are customized on the user terminal according to travel demand of the user.

Automatic scenario coordination is performed on the smart household device through the state of the vehicle and the operation on the vehicle by the user. For example, when the user turns on the wiper repeatedly, an automatic window closing event in a rainy day is triggered to close the window associated with the smart household device at home.

For another example, under the condition that the vehicle enters or exits a geofence, the vehicle is deemed to arrive at home when the vehicle enters the geofence, and the vehicle is deemed to leave home when the vehicle exits the geofence. The corresponding automatic scenario is triggered according to the state of the vehicle. For example, when the vehicle arrives at home, the lamp, the air conditioner, an electric heater, etc. are turned on in a coordinated manner. Moreover, the smart household air conditioning device is adjusted by synchronizing a parameter setting of the vehicle-mounted air conditioning device in the vehicle with the smart household air conditioning device at home.

Optionally, when the vehicle starts and ends charging, all the users of the family are informed by sending a charging situation to user terminals of all users of the family. Accordingly, the state of the vehicle is in control of an entire family. The psychological connection between a home space and a vehicle space of the user may also be maintained by synchronizing a state of the smart household device to the vehicle in real time. For example, information and a state of audio played by a smart speaker at home are synchronized to the vehicle. For another example, a smart door lock alarm event is pushed to the vehicle.

For implementing the above method example, the invention provides a coordinated control apparatus for a device. With reference to Fig. 10, the coordinated control apparatus 600 for a device includes:
a first generation module 610 configured to acquire an operation signal generated for a control operation on an operation object;
a first association module 620 configured to determine a first control event associated with the operation signal;
a second association module 630 configured to determine a second control event associated with the first control event; and
a second generation module 640 configured to generate a control signal for a target apparatus according to the second control event, where the control signal is configured to control the target device.

Optionally, the target device is a smart household device in response to determining that the operation object is a vehicle-mounted device; or the target device is a vehicle-mounted device in response to determining that the operation object is a smart household device.

Optionally, the target device is a smart household device in response to determining that the operation object is a vehicle-mounted device; and the target device is a vehicle-mounted device in response to determining that the operation object is a smart household device.

Optionally, the first association module 620 includes:
a category confirmation module configured to categorize the operation signal, and confirm a category to which the operation signal belongs;
a format conversion module configured to convert the operation signal from a format corresponding to the operation object to a format corresponding to the category; and
a first event confirmation module configured to acquire the first control event according to an operation signal in the format corresponding to the category.

Optionally, the second association module 630 includes:
an environment information acquisition module configured to acquire first environment information corresponding to the operation object, and acquire second environment information corresponding to the target device; and
a second event confirmation module configured to determine the second control event for the target device according to the first control event in response to determining that the first environment information is consistent with the second environment information.

Optionally, the coordinated control apparatus 600 for a device further includes:
a subscription module configured to receive a subscription request from a user terminal for the operation object; and
a sending module configured to send the operation signal to the user terminal in response to the subscription request.

Optionally, an operation result of the operation object is carried in the operation signal; and the sending module includes:
an update module configured to take, in response to determining that the operation result is out of a preset range, a boundary value of the preset range as a new operation result; and
an operation result sending module configured to send the new operation result to the user terminal.

A specific way of each module of the apparatus in the above example to execute the operation has been described in detail in the example relating to the method and will not be described in detail here.

The invention further provides a non-transitory computer-readable storage medium. The non-transitory computer-readable storage medium stores a computer program instruction, where the computer program instruction implements steps of the coordinated control method for a device provided by the invention when executed by a processor.

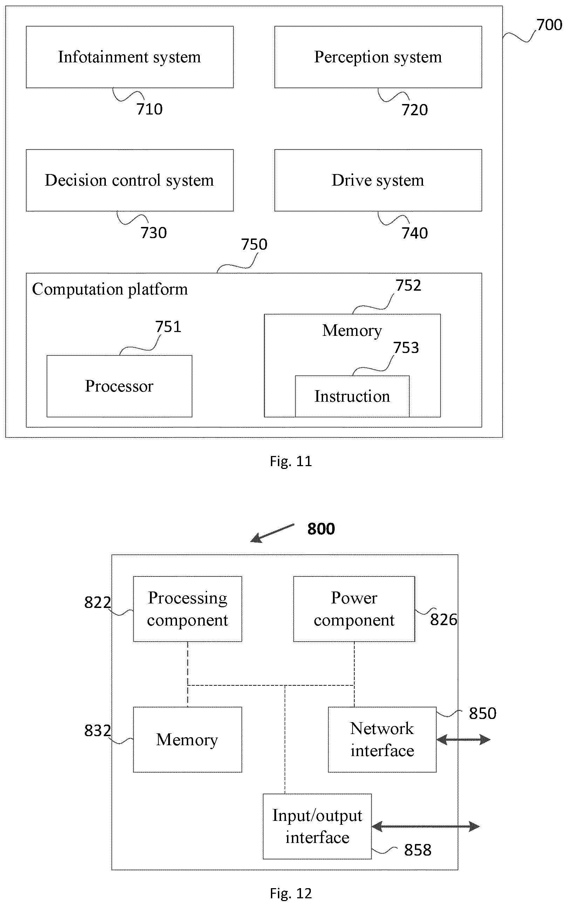

Fig. 11 is a block diagram of a vehicle 700 shown according to an example. For example, the vehicle 700 may be a hybrid vehicle, a non-hybrid vehicle, an electric vehicle, a fuel cell vehicle, etc. The vehicle 700 may be an autonomous vehicle, a semi-autonomous vehicle, or a non-autonomous vehicle.

With reference to Fig. 11, the vehicle 700 may include various sub-systems, such as an infotainment system 710, a perception system 720, a decision control system 730, a drive system 740, and a computation platform 750. The vehicle 700 may further include more or fewer sub-systems, and each sub-system may include a plurality of components. Also, the sub-systems and between the components of the vehicle 700 may be interconnected in a wired or wireless manner.

In some examples, the infotainment system 710 may include a communication system, an entertainment system, a navigation systems, etc.

The perception system 720 may include several sensors configured to perceive information of an environment surrounding the vehicle 700. For example, the perception system 720 may include a global locating system (such as a global positioning system (GPS) and a Beidou system), an inertial measurement unit (IMU), a laser radar, a millimeter wave radar, an ultrasonic radar, and a photographing apparatus.

The decision control system 730 may include a computation system, a vehicle controller, a steering system, a throttle, and a braking system.

The drive system 740 may include components that provide power for the vehicle 700 to move. In an example, the drive system 740 may include an engine, an energy source, a transmission system, and wheels. The engine may be one or a combination of an internal combustion engine, an electric motor, and an air compression engine. The engine may convert energy provided by the energy source into mechanical energy.

Some or all functions of the vehicle 700 are controlled by the computation platform 750. The computation platform 750 may include at least one processor 751 and a memory 752, where the processor 751 may execute an instruction 753 stored in the memory 752.

The processor 751 may be any conventional processor, such as a commercially-available central processing unit (CPU). The processor may further include, for example, a graphic process unit (GPU), a field programmable gate array (FPGA), a system on chip (SOC), an application specific integrated circuit (ASIC), or their combinations.

The memory 752 may be implemented through any type of volatile or non-volatile storage devices or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

Except for the instruction 753, the memory 752 may also store data, such as road maps, route information, and a location, a direction, a speed, etc. of the vehicle. The data stored in the memory 752 may be used by the computation platform 750.

In the example of the invention, the processor 751 may complete all or some steps of the above coordinated control method for a device by executing the instruction 753.

Fig. 12 is a block diagram of a server configured for a coordinated control method for a device shown according to an example. With reference to Fig. 12, the server 800 includes a processing component 822 that further includes one or more processors, and memory resources represented by a memory 832 and configured to store an instruction executable by the processing component 822, for example, an application. The application stored in the memory 832 may include one or more modules, each of which corresponds to a set of instructions. In addition, the processing component 822 is configured to execute the above coordinated control method for a device by executing the instruction.

The server 800 may further include a power source component 826 configured to execute power source management of the server 800, a wired or wireless network interface 850 configured to connect the server 800 to a network, and an input/output interface 858. The server 800 may operate on the basis of an operating system stored in the memory 832.

A computer program product is further provided in another example. The computer program product encompasses a computer program executable by a programmable apparatus, where the computer program has a code portion configured to execute the above coordinated control method for a device when executed by the programmable apparatus.

According to the coordinated control method for a device provided by the invention, the operation signal generated for the control operation on the operation object is acquired; the first control event associated with the operation signal is determined; the smart association is performed on the basis of the first control event corresponding to the operation object; the second control event associated with the first control event is determined; and the control signal configured to control the target device is generated according to the second control event. The target device is controlled in the coordinated manner while the operation object is controlled. Accordingly, the user is not required to control the plurality of devices individually, so that the operation process is simplified.

## Claims

1. A coordinated control method for a device, comprising:
acquiring (S110) an operation signal generated for a control operation on an operation object;
determining (S120) a first control event associated with the operation signal;
determining (S130) a second control event associated with the first control event; and
generating (S140) a control signal for a target device according to the second control event,
wherein the control signal is configured to control the target device.

2. The coordinated control method according to claim 1, wherein the target device is a smart household device in case that the operation object is a vehicle-mounted device; or the target device is a vehicle-mounted device in case that the operation object is a smart household device.

3. The coordinated control method according to claim 1 or 2, wherein the control signal is configured to control at least one parameter of the target device.

4. The coordinated control method according to any one of claims 1-3, wherein the determining (S120) a first control event associated with the operation signal comprises:
categorizing the operation signal, and confirming a category to which the operation signal belongs;
converting the operation signal from a format corresponding to the operation object to a format corresponding to the category; and
acquiring the first control event according to an operation signal in the format corresponding to the category.

5. The coordinated control method according to any one of claims 1-4, wherein the determining (S130) a second control event associated with the first control event comprises:
acquiring first environment information corresponding to the operation object, and acquiring second environment information corresponding to the target device; and
determining the second control event for the target device according to the first control event on a condition that the first environment information is consistent with the second environment information.

6. The coordinated control method according to any one of claims 1-5, further comprising:
receiving a subscription request from a user terminal for the operation object; and
sending the operation signal to the user terminal in response to the subscription request.

7. The coordinated control method according to claim 6, wherein an operation result of the operation object is carried in the operation signal; and the sending the operation signal to the user terminal comprises:
taking, on a condition that the operation result is out of a preset range, a boundary value of the preset range as a new operation result; and
sending the new operation result to the user terminal.

8. An electronic device (700), comprising:
a processor (751); and
a memory (752) configured to store an instruction executable by the processor (751); wherein
the processor (751) is configured to:
acquire (S110) an operation signal generated for a control operation on an operation object;
determine (S120) a first control event associated with the operation signal;
determine (S130) a second control event associated with the first control event; and
generate (S140) a control signal for a target device according to the second control event,
wherein the control signal is configured to control the target device.

9. The electronic device (700) according to claim 8, wherein the target device is a smart household device in case that the operation object is a vehicle-mounted device; or the target device is a vehicle-mounted device in case that the operation object is a smart household device.

10. The electronic device (700) according to claim 8 or 9, wherein the control signal is configured to control at least one parameter of the target device.

11. The electronic device (700) according to any one of claims 8-10, wherein the processor (751) is configured to:
categorize the operation signal, and confirming a category to which the operation signal belongs;
convert the operation signal from a format corresponding to the operation object to a format corresponding to the category; and
acquire the first control event according to an operation signal in the format corresponding to the category.

12. The electronic device (700) according to any one of claims 8-11, wherein the processor (751) is configured to:
acquire first environment information corresponding to the operation object, and acquiring second environment information corresponding to the target device; and
determine the second control event for the target device according to the first control event on a condition that the first environment information is consistent with the second environment information.

13. The electronic device (700) according to any one of claims 8-12, wherein the processor (751) is further configured to:
receive a subscription request from a user terminal for the operation object; and
send the operation signal to the user terminal in response to the subscription request.

14. The electronic device (700) according to claim 13, wherein an operation result of the operation object is carried in the operation signal; and the processor (751) is configured to:
take, on a condition that the operation result is out of a preset range, a boundary value of the preset range as a new operation result; and
send the new operation result to the user terminal.

15. A non-transitory computer-readable storage medium, storing a computer program instruction, wherein the computer program instruction when executed by a processor cause the processor to execute a method comprising:
acquiring (S110) an operation signal generated for a control operation on an operation object;
determining (S120) a first control event associated with the operation signal;
determining (S130) a second control event associated with the first control event; and
generating (S140) a control signal for a target device according to the second control event, wherein the control signal is configured to control the target device.
